# EUROPÄISCHE PATENTSCHRIFT

(11) **EP 1 922 596 B1**
(45) Veröffentlichungstag und Bekanntmachung des Hinweises auf die Patenterteilung: **15.04.2009**
(21) Anmeldenummer: 07711495.7
(22) Anmeldetag: 09.02.2007
(51) Int. Cl.: G05B 19/418, B25J 9/16

(54) **VERFAHREN UND VORRICHTUNG ZUR VOLLAUTOMATISCHEN ENDKONTROLLE VON BAUTEILEN UND/ODER DEREN FUNKTIONSEINHEITEN**
METHOD AND DEVICE FOR THE FULLY AUTOMATIC FINAL INSPECTION OF COMPONENTS AND/OR THEIR FUNCTIONAL UNITS
PROCÉDÉ ET DISPOSITIF DE CONTRÔLE FINAL ENTIÈREMENT AUTOMATIQUE DE COMPOSANTS ET/OU DE LEURS UNITÉS FONCTIONNELLES

(30) Priorität: 10.02.2006 DE 102006006246
(43) Veröffentlichungstag der Anmeldung: 21.05.2008
(73) Patentinhaber: Battenberg, Günther, 35043 Marburg (DE)
(72) Erfinder: Battenberg, Günther, 35043 Marburg (DE)
(74) Vertreter: Buchhold, Jürgen
(86) Internationale Anmeldenummer: PCT/EP2007/001129
(87) Internationale Veröffentlichungsnummer: WO 2007/090672

(56) Entgegenhaltungen:
- EP-A- 1 202 041
- EP-A- 1 473 123
- WO-A-20/04026537
- WO-A-20/06084666
- DE-A1- 10 312 663
- DE-A1- 19 943 318
- DE-U1- 29 607 383
- US-A- 5 390 128
- US-A1- 2003 093 183

## Beschreibung

Die vorliegende Erfindung betrifft ein Verfahren und ein System zur vollautomatischen Endkontrolle von Bauteilen.

In Produktionsprozessen werden komplexe Produkte meist arbeitsteilig durch Produktion von Untergruppen, insbesondere Bauteilen, Funktionseinheiten und dergleichen, welche in zum Teil unabhängigen Produktionsschritten gefertigt werden, hergestellt, wobei die Untergruppen, Bauteile etc. modular ausgebildet sind und zu dem fertigen Endprodukt zusammengesetzt werden. Dabei werden die Bauteile in der Regel in eine die modularen Bauteile aufnehmende Raumstruktur wie zum Beispiel ein Gehäuse, eine Rahmenstruktur und dergleichen eingefügt.

Aufgrund von Fertigungs-, Montage- und/oder sonstigen Toleranzen oder Abweichungen von einem vorgegeben Sollwert können die Bauteile in Bezug auf die Raumstruktur abweichend von einer Sollposition angeordnet sein. Bei komplexen und umfangreichen Produkten mit einer Vielzahl von Untergruppen und/oder Bauteilen, welche in einer Raumstruktur angeordnet werden sollen, kann es aufgrund der Toleranzen, die sich beispielsweise nach Art einer Fehlerfortpflanzung aufaddieren oder gar potenzieren, bei der Endmontage der Bauteile in die Raumstruktur zu Problemen kommen, beispielsweise so, dass Bauteile nicht mehr in die Raumstruktur eingefügt werden können, da aufgrund sich addierender Toleranzfehler nicht genug Bauraum zur Verfügung steht.

Oft weisen die Bauteile selbst noch weitere Unterbauteile oder Funktionseinheiten auf, wobei auch diese aufgrund von Unregelmäßigkeiten in der Fertigung fehlerhaft ausgebildet sein können. So kann es passieren, dass zwar das Bauteil in die Raumstruktur fehlerfrei eingefügt ist, die Funktionseinheit des Bauteils aber selbst fehlerhaft ist.

Darüber hinaus sind eine Vielzahl von fehlerhaften Anordnung, Ausbildungen und dergleichen vorstellbar, welche in dem Endprodukt vermieden werden sollen.

Um möglichst einwandfreie Endprodukte, bestehend aus mindestens einer Untergruppe oder einem Bauteil, angeordnet In einer Raumstruktur, zu garantieren, ist es bekannt, das Endprodukt manuell durch speziell ausgebildete Prüfpersonen prüfen und abnehmen zu lassen. Insbesondere die Prüfung der betätigbaren Funktionseinheiten wird manuell durchgeführt, da es bei dem Kunden sehr auf die persönliche Wahrnehmung ankommt und eine entsprechende angenehme Wahrnehmung des Kunden nur durch manuelle Prüfung und nicht bei einer maschinell durchgeführten Prüfung garantiert werden konnte.

Insbesondere bei sehr komplexen Endprodukten mit einer Vielzahl von Baugruppen, beispielsweise bei einem Kraftfahrzeug, sind extrem viele Prüfungen durchzuführen, welche sehr zeit- und arbeitsintensiv sind. Zudem ist die manuelle Prüfung schwerlich reproduzierbar ausführbar und hängt sehr von den persönlichen Eigenschaften des Prüfpersonals ab.

Dokument EP1202041A1 offenbart ein automatisiertes Verfahren und eine Vorrichtung zur Belastungsprüfung von elektrischen Systemen eines Kraftfahrzeugs. Die Bedienelemente der elektrischen Systeme werden dabei von einem extern gesteuerten Roboter während einer Testperiode von typischerweise 7 bis 14 Tagen betätigt. Das die elektrischen Systeme enthaltende Kraftfahrzeug befindet sich während des Testes in einer Simulationskammer, in welcher über eine Klimaanlage Temperatur und/oder Luftfeuchtigkeit sowie über Strahler eine simulierte Sonneneinstrahlung eingestellt werden können. Ferner kann über einen Straßensimulator die beim Fahren auftretende Beschleunigung simuliert werden. Vorzugsweise werden die beim Bestätigen der Bedienelemente auftretenden Kräfte und Momente vom Roboter sensorisch erfasst.

Ziel der Erfindung ist es, ein Verfahren und ein System zur vollautomatischen Endkontrolle von Bauteilen und/oder Funktionseinheiten zu schaffen, welche insbesondere in einer Raumstruktur angeordnet sind. Des Weiteren sollen Sensoren zum Einsatz in einem Verfahren und/oder einem System zur vollautomatischen Endkontrolle geschaffen werden.

Diese Aufgabe wird gelöst durch ein Verfahren gemäß Anspruch 1 und einem System gemäß Anspruch 36. Zudem wird die Aufgabe durch ein Computerprogramm sowie ein Computerprogrammprodukt gemäß Anspruch 34 bzw. 35 gelöst. Die Aufgabe wird weiter durch einen Sensor gemäß Anspruch 46 gelöst. Weiterführende Ausgestaltungen und vorteilhafte Weiterentwicklungen sind in den hiervon abhängigen Ansprüchen angegeben.

Die Erfindung schließt die technische Lehre ein, dass ein Verfahren zur vollautomatischen Endkontrolle von Bauteilen, insbesondere deren betätigbaren Funktionseinheiten, mit einem Roboter umfassend eine Prüfvorrichtung zum Durchführen der Endkontrolle die Schritte umfasst sind: selbsttätiges Ausrichten des Roboters und/oder der Prüfvorrichtung zu dem zu prüfenden Bauteil und/oder dessen Funktionseinheit anhand von Orientierungsdaten, reproduzierbares Durchführen von Einzelkontrollen mittels der Prüfvorrichtung, wobei die Schritte selbsttätiges Ausrichten und reproduzierbares Durchführen wiederholt werden, bis ein Abbruchkriterium erfüllt und/oder die Endkontrolle komplett durchgeführt ist.

Durch diese vollautomatische Endkontrolle ist es möglich, die Endkontrolle reproduzierbar und mit gleich bleibender Qualität nach bestimmten, immer gleichen Vorgaben durchzuführen.

Ein Bauteil kann dabei jedes beliebige Teil sein, welches beispielsweise in eine Raumstruktur eingesetzt werden kann. Die Bauteile können bevorzugt serienmäßig hergestellt sein. Insbesondere können die Bauteile schon vor Anordnung in einer Raumstruktur geprüft werden, beispielsweise auf einem Produktionsband oder dergleichen. Dabei ist auch eine Endkontrolle der Bauteile vollautomatisch möglich, wenn die Bauteile in unterschiedlichen Positionen und Orientierungen beispielsweise auf dem Produktionsband angeordnet sind. Bauteile können auch alle in einem Kraftfahrzeug insbesondere an dessen Cockpit vorfindbaren Bauteile wie Autoradio, Schalthebel, Lenkrad, Navigationssystem, Klimaanlage und dergleichen sein. Dabei weisen die Bauteile auch verschiedene Funktionseinheiten wie Schalter, Bedienelemente, Regler, Anzeigen und dergleichen auf.

Um die vollautomatische Endkontrolle durchzuführen ist bevorzugt ein Roboterarm einsetzbar, der vorteilhafter Weise eine Prüfvorrichtung aufweist.

Der Roboter setzt in einem ersten Schritt das selbsttätige Ausrichten um. Hierdurch wird der Roboter, dessen Roboterarm und insbesondere die Prüfvorrichtung ausgerichtet. Um dieses Ausrichten durchführen zu können, weist der Roboter weiter eine Sensoreinheit zur Erfassung von Orientierungsdaten auf. Mit dieser Sensoreinheit erfasst der Roboter sowohl Informationen über die eigene Position als auch Informationen über die Position der Prüfvorrichtung. Die Sensoreinheit kann in Form eines Gyroskops oder eines Kraft-Moment-Sensors ausgebildet sein. Die Orientierungsdaten umfassen insbesondere Lage- und oder Rotationsinformationen, die sich über zumindest einen der Vektoren und/oder Richtungen entlang und/oder um eine x-Achse, entlang und/oder um eine y-Achse und/oder entlang und/oder um eine z-Achse darstellen lassen. Für die Orientierungsdatenerfassung kann also ein karthesisches Koordinatensystem verwendet werden, anhand dessen die Orientierungsdaten erfasst und/oder verarbeitet werden können. Jedoch ist auch jedes andere Koordinatensystem beispielsweise mittels Zylinder und oder Polarkoordinaten sowie transformierte Koordinatensysteme verwendbar.

Dabei wird für die Verarbeitung von Orientierungsdaten ein festes Koordinatensystem zugrunde gelegt, welches beispielsweise anhand einer Raumstruktur ausgewählt ist. Die Bauteile und/oder deren Anordnung im Raum sowie deren gedrehte Position im Raum können dann in Bezug auf dieses feste Koordinatensystem erfasst, abgelegt und oder berechnet werden.

Orientierungsdaten umfassen somit alle Informationen, welche Auskunft über die Anordnung eines Bauteils, einer Raumstruktur, einer Funktionseinheit und dergleichen in einem Raum, bevorzugt einem dreidimensionalen Raum geben.

Das reproduzierbare Durchführen einer Einzelkontrolle wird mittels der Prüfvorrichtung durchgeführt.

Um das gesamte Endprodukt einer Endkontrolle zu unterziehen, werden die Einzelkontrollen und falls notwendige auch die Ausrichtungen solange und wiederholt durchgeführt, bis die Endkontrolle abgeschlossen ist oder ein beliebiges Abbruchkriterium erfüllt ist. Abbruchkriterien können auch manuell eingegeben werden.

Es ist weiter bevorzugt, dass der Schritt Erfassen, Speichern und/oder Abrufen von Orientierungsdaten des Roboters, der Prüfvorrichtung, des Bauteils und/oder dessen Funktionseinheiten umfasst ist.

Die Orientierungsdaten, die Informationen über die jeweilige Anordnung und/oder Rotation im dreidimensionalen Raum beinhalten, können selbsttätig von dem Roboter über dessen Sensoreinrichtung erfasst werden. Diese lassen sich dann Speichern oder in einem Speicher ablegen, um diese beispielsweise später wieder abzurufen oder hinsichtlich einer Optimierung weiter zu verarbeiten.

Es lassen sich jedoch auch Orientierungsdaten vorgeben. So liegen heute viele Informationen von Bauteilen, Raumstrukturen und dergleichen in Modellform, beispielsweise als CAD-Daten und dergleichen vor. Hieraus lassen sich ebenfalls Orientierungsdaten an den Roboter bzw. dessen Steuerung übertragen. Diese zuvor als beispielsweise CAD-Daten abgelegten Orientierungsdaten können zum Beispiel als Sollvorgaben abgelegt werden und bieten eine erste Positionsbestimmung für den Roboter.

Die vorgegebenen und abgerufenen Orientierungsdaten können vorzugsweise mit den erfassten Orientierungsdaten verglichen werden und anhand von Berechnungsalgorithmen optimiert werden, um Arbeitsabläufe insbesondere die Prüfungsdurchführung zu optimieren.

Bevorzugt ist, dass die Daten ständig optimiert werden und/oder dass der Schritt selbsttätiges Ausrichten weiter den Schritt umfasst: Verfahren zumindest eines Roboterarms des Roboters und/oder der Prüfvorrichtung zu erfassten und/oder abgerufenen Orientienrngsdaten. Insbesondere bei optimierten Orientierungsdaten lässt sich der Roboterarm schnell und zuverlässig Positionieren, so dass eine schnelle Prüfung bzw. Endkontrolle gewährleistet werden kann. Insbesondere lässt sich so eine maschinelle Endkontrolle durchführen.

Darüber hinaus ist es bevorzugt, dass der Schritt Erfassen und/oder Speichern von Orientierungsdaten des Roboters, der Prüfvorrichtung, des Bauteils und/oder dessen Funktionseinheiten den Schritt umfasst: Erfassen und/oder Speichern von Orientierungsdaten des Roboters, der Prüfvorrichtung, des Bauteils und/oder dessen Funktionseinheiten in Bezug auf vorgegebene Orientierungsdaten.

Legt man ein festes Koordinatensystem für die Ansteuerung des Roboters fest, so lassen sich alle Raumstrukturen, Bauteile etc. relativ zu diesem Koordinatensystem erfassen, speichern und/oder abrufen. Dies hat den Vorteil, dass man bei einem Versatz oder einer Verschiebung des festgelegten Koordinatensystems die dazu gewonnenen Orientierungsdaten weiter verwenden.

Eine bevorzugte Ausführungsform sieht vor, dass der Schritt selbsttätiges Ausrichten weiter den Schritt umfasst: Berechnung der Informationen über die mit der Prüfvorrichtung anzufahrende Position für die reproduzierbare Durchführung der Endkontrolle. Aufgrund der Berechnung der anzufahrenden Position vor jeder Einzelkontrolle ist eine stets optimierte und adaptive Durchführung der Einzelkontrolle auch bei veränderten Situationen wie fehlenden oder zusätzlichen Eigenschaften des zu prüfenden Bauteils und dergleichen möglich. Es erfolgt somit eine ständige Neuberechnung von Informationen, welche verschiedene und oft wechselnde Einbausituationen berücksichtigen.

Weiter ist bevorzugt, dass der Schritt Berechnung der Information über die mit der Prüfvorrichtung anzufahrende Position weiter den Schritt umfasst: Berechnung der Information über die mit der Prüfvorrichtung anzufahrende Position anhand eines Lageerkennungsalgorithmus. Hierdurch können bekannte und hinsichtlich Zuverlässigkeit erprobte Algorithmen verwendet werden, die beispielsweise auch als Software vorliegen, so dass die Verfahren leicht adaptierbar und ausreichend verfügbar sind, und so auch zu bestehenden Steuerungen kompatibel sind. Als ein Beispiel eines Lageerkennungsalgorithmus kann hier ein Algorithmus nach dem Triangulationsprinzip verwendet werden. Somit sieht eine weitere vorteilhafte Ausgestaltung der Erfindung vor, dass der Schritt Berechnung der Information über die mit der Prüfvorrichtung anzufahrende Position anhand eines Lageerkennungsalgorithmus weiter den Schritt umfasst: Berechnung der Information über die mit der Prüfvorrichtung anzufahrende Position anhand eines Lageerkennungsalgorithmus nach dem Prinzip des Triangulationsverfahrens.

Bevorzugt ist zudem, dass der Schritt reproduzierbares Durchführen weiter den Schritt umfasst: Berechnen, Erfassen, Speichern und/oder Abrufen der Informationen über das zu prüfende Bauteil oder dessen Funktionseinheit einschließlich der Prüfungsinformationen für die durchzuführende Prüfung. Für die Prüfung reicht es nicht aus, lediglich die Orientierungsdaten des zu prüfenden Bauteils zu kennen. Insbesondere sind weitere, speziell für die Prüfung notwendige Daten notwendig. So muss die Prüfung für einen Schalter anders durchgeführt werden als beispielsweise für ein Display. Zudem können andere Kräfte und/oder Bewegungen für verschiedene Schalter notwendig sein. Insbesondere bei Schaltern mit mehreren Funktionen, die beispielsweise über ein Drehen oder ein Drücken oder beides abgerufen werden können, müssen auch alle Funktionen kontrolliert werden. Hierfür ist es erforderlich, diese Informationen an den Roboter zu übertragen.

Somit ist es vorteilhaft, dass der Schritt reproduzierbares Durchführen weiter den Schritt umfasst: Durchführung einer Einzelkontrolle anhand der Prüfungsinformationen. Somit kann für jede einzelne zu prüfende Einheit eine individuelle Prüfung erfolgen, was eine maximale Qualitätskontrolle gewährleistet.

Um eine qualitativ hochwertige Endkontrolle zu gewährleisten ist es weiter vorteilhaft, dass der Schritt reproduzierbares Durchführen weiter den Schritt umfasst: Erfassen mindestens einer Information über das Feedback auf die Durchführung der Einzelkontrolle. So lässt sich über das gewonnene Feedback eine Beurteilung der Kontrolle gewinnen. Die Beurteilung kann dabei binärer oder digitaler Art sein, etwa nach der Art "Funktionseinheit funktioniert" - "Funktionseinheit funktioniert nicht", und/oder aber auch quantitativer Art. Die quantitative Beurteilung ermöglicht das Einordnen von Bauteilen in bestimmte "Güteklassen". So lassen sich dann Bauteile, die einer qualitativ hochwertigen Güteklasse angehören, entsprechend in ein hochwertiges Endprodukt einfügen oder als hochwertiges Endprodukt einstufen und ein qualitativ weniger hochwertiges Bauteil in einem entsprechend weniger hochwertigem Endprodukt verwenden. Auf diese Weise ist eine ökonomischere Nutzung von Bauteilen möglich.

Die Informationen können alle mittels Programmierung vorgegeben sein, oder automatisch erfasst werden. Oftmals ist aber ein Programmierung oder eine automatische Erfassung sehr aufwendig und/oder zeitintensiv.

Aus diesem Grunde ist es in manchen Fällen vorteilhaft, dass die Informationen für das Verfahren einschließlich der Orientierungsdaten des zu prüfenden Bauteils und/oder deren betätigbarer Funktionseinheit und/oder der Prüfungsinformationen in einem Teachingverfahren gewonnen werden. Hierbei verfährt man den Roboter und/oder die Prüfvorrichtung manuell entlang der oder mit den gewünschten Orientierungsdaten. Hierdurch können auf einfache Weise benötigte Informationen ohne spezielle Kenntnisse in der Programmierung gewonnen werden. Der Roboter verarbeitet die mittels Teachingverfahren gewonnen Informationen entsprechend und setzt diese dann um.

Der Roboter kann nicht nur manuell verfahren werden. Auch ist es möglich, die Prüfung manuell durchzuführen, so dass der Roboter auch die Prüfinformationen entsprechend erhalten kann.

Das Teachingverfahren kann mittels manuellem Handhaben des Roboters erfolgen. Ein besondere Ausgestaltung der Erfindung sieht vor, dass das Teachingverfahren die Schritte umfasst: manuelles Führen und/oder Handhaben des Roboters und/oder der Prüfvorrichtung durch Bewegen/Handhaben eines Messsensors der Prüfvorrichtung, Erfassen der Informationen über das manuelle Führen und abrufbares Ablegen der erfassten Informationen über das manuelle Führen. Insbesondere durch das Handhaben des Messsensors bzw. der vordersten Spitze des Roboters oder genauer der Prüfvorrichtung ist eine sehr präzise Informationsgewinnung mittels des Teachingsverfahrens möglich. Zudem ist das Handhaben sehr genau und der Test und/oder die Kontrolle kann unter realen Bedingungen durchgeführt werden. Somit kann auf mehrere Teaching-Durchläufe aufgrund von ungenauer oder fehlerhafter Handhabung verzichtet werden.

Obwohl das Teachingverfahren durch Handhaben der vorderen Spitze bzw. des Messsensors sehr zuverlässige Informationen liefert, können diese für die maschinelle Durchführung der Endkontrolle weiter verbessert werden. So ist es vorteilhaft, dass das Teachingverfahren weiter den Schritt umfasst: Optimierung der erfassten Informationen. Die Optimierung kann beispielsweise hinsichtlich der Verfahrweglänge, der Zeit, der Rotationen und oder der Anzahl der Richtungsänderung und/oder Arbeitsschritte erfolgen.

Wie zuvor ausgeführt ist es vorteilhaft, dass das Teachingverfahren weiter die Schritte umfasst: manuelles Durchführen der Einzelkontrolle mittels der Prüfvorrichtung, Erfassen der Informationen über das Durchführen der Einzelkontrolle, abrufbares Speichern der erfassten Informationen über die Durchführung der Einzelkontrolle. Auf diese Weise lässt sich eine optimierte Endkontrolle mittels geringen Programmieraufwands gewährleisten.

Das Verfahren zur vollautomatischen Endkontrolle lässt sich vorteilhafter Weise an einer Produktionslinie einer getakteten Produktionsstraße durchführen. Hierbei kann die Endkontrolle auch schon während der Produktion, zum Beispiel unmittelbar nach dem Einbau eines Bauteils durchgeführt werden. Ein typisches Beispiel für die Verwendung des Verfahrens kann eine Kraftfahrzeugfertigungslinie sein, bei der die fertig gestellten Kraftfahrzeuge einer vollautomatischen Endkontrolle unterzogen werden.

Insbesondere können das zu prüfende Bauteil und/oder dessen Funktionseinheit und der Roboter in unterschiedlichen, abgegrenzten, über eine Zugangsstelle verbundenen Raumstrukturen angeordnet sein, bevor das Verfahren durchgeführt wird. Hierbei muss der Roboter bzw. dessen Prüfvorrichtung entsprechend in die andere Raumstruktur bewegt werden. Ein Beispiel für die verschiedenen Raumstrukturen kann die zuvor ausgeführte Kraftfahrzeugproduktionslinie, insbesondere das Innere und das Äußere eines fertig gestellten Kraftfahrzeugs sein. Der Roboter ist dabei außerhalb des Kraftfahrzeugs angeordnet und die Bauteile sind in das Kraftfahrzeug eingefügt. Um nun die Endkontrolle durchzuführen, muss der Roboter bzw. die Prüfvorrichtung, welche insbesondere an einem äußeren Ende eines Roboterarms des Roboters angeordnet sein kann, in das Kraftfahrzeug, das heißt die andere Raumstruktur, verfahren werden.

Wie erwähnt, sieht eine bevorzugte Ausführungsform vor, dass eine Raumstruktur, in der das zu prüfende Bauteil und/oder dessen Funktionseinheit angeordnet ist, ein Kraftfahrzeug ist. Das Verfahren in die andere Raumstruktur oder das Kraftfahrzeug erfolgt über eine Zugangsstelle, die unterschiedliche Geometrien aufweisen kann und insbesondere unterschiedlich groß ausgebildet sein kann.

Deshalb umfasst das Verfahren bevorzugt die Schritte: Auffinden einer Zugangsstelle und Verfahren des Roboters und/oder der Prüfvorrichtung durch die Zugangsstelle, wobei die Schritte Auffinden und Verfahren vor dem Schritt selbsttätiges Ausrichten durchgeführt werden. Somit kann, wenn beispielsweise die Zugangsstelle nach der Endmontage verschlossen ist, das Verfahren durch den Auffindalgorithmus trotzdem zuverlässig und fehlerfrei durchgeführt werden. In dem Fall, dass eine Raumstruktur ein Kraftfahrzeug ist, kann eine Kraftfahrzeugtür, der Kofferraum und dergleichen die Zugangsstelle das die Zugangsstelle verschließende Teil bilden. Genauer bildet der durch die beweglichen Teile der Außenkarosserie benachbart zum Innenraum oder zu Raum, in dem das zu prüfende Teil angeordnet ist, verschlossene Bereich die Zugangsstelle. Um nun die Endkontrolle vollautomatisch durchzuführen, muss beispielsweise der Roboterarm die Tür, den Kofferraum, die Motorraumklappe und dergleichen auffinden, diese Öffnen und somit die Zugangsstelle zugänglich machen. Nach diesem Schritt kann der Roboter in die andere Raumstruktur verfahren und das Verfahren weiter ausführen.

Deshalb sieht eine vorteilhafte Ausgestaltung der Erfindung vor, dass das Verfahren weiter die Schritte umfasst: Erfassen der Zugangsstelle und Öffnen der Zugangsstelle, wobei der Schritt Öffnen der Zugangsstelle vor dem Schritt Verfahren des Roboters durch die Zugangsstelle ausgeführt wird.

Noch eine weitere vorteilhafte Ausgestaltung sieht vor, dass der Schritt Verfahren des Roboters mittels Verfahren auf mindestens einer linearen Verfahrachse durchgeführt wird. Somit kann der Roboter, der die Endkontrolle durchführt beliebig linear verfahren werden, was eine leichte Ansteuerung ermöglicht. Insbesondere bei Anordnung der Bauteile und des Roboters in unterschiedlichen Raumstrukturen kann der Roboter wegoptimiert außerhalb der Raumstruktur, in der das zu prüfende Bauteil angeordnet ist, verfahren werden und insbesondere bei mehreren Zugangsstellen die optimale Zugangsstelle angefahren werden. Natürlich ist auch jedes andere Verfahrsystem zur Bewegung eines Roboters möglich, beispielsweise entlang einer Kreisbahn oder eins 3D-Schienensystems.

Um die Endkontrolle in möglichst vielen Einsatzgebieten durchzuführen ist es bevorzugt, dass das Verfahren zusätzlich zu dem Schritt Erfassen, Speichern und/oder Abrufen des Bauteils das mehrdimensionale Erfassen, Speichern und/oder Abrufen des Bauteils, umfassend Bauteile mit Freiformflächen, umfasst. Auf diese Weise können selbst komplexe und regelmäßig schwer zu kontrollierende Freiformflächen vollautomatisch kontrolliert werden.

Eine vorteilhafte Ausgestaltung der Erfindung sieht weiter vor, dass das Erfassen des Bauteils mittels einer Dreipunktmessung durchgeführt wird, wobei die Dreipunktmessung auch die Dreipunktmessung in mehr als einer Ebene nach Art eines Triangulationsverfahrens umfasst.

Insbesondere werden beim Erfassen, Speichern und/oder Abrufen der Informationen Informationen verarbeitet, ausgewählt aus der Gruppe der optischen, akustischen, elektrischen, elektronischen und/oder haptischen Informationen. Somit werden die für den Kunden relevanten und kaufentscheidenden Kriterien verarbeitet.

Bevorzugt ist, dass beim Erfassen der optischen. Informationen Informationen erfasst werden, ausgewählt aus der Gruppe umfassend Beleuchtungsinformationen, Symbolinformationen, Pixelinformationen, Geometrieinformationen, Spaltmaßinformationen, Farbinformationen, Lichtreflexionsinformationen, Bündigkeitsinformationen, Glanzgradinformationen, Körnungsabstimmungsinformation und dergleichen.

Weiter bevorzugt ist, dass beim Erfassen der haptischen Informationen Information erfasst werden, ausgewählt aus der Gruppe umfassend Elastizitätsinformationen, Steifigkeitsinformationen, Rückstellrateninformationen, Reibungsinformationen, Rauhigkeitsinformationen, topografische Informationen, gefühlte Temperaturinformationen, Härte, Kraftprofilinformationen, Drehmomentinformationen, stereotype Bedienungsinformation und dergleichen.

Darüber hinaus ist es bevorzugt, dass beim Erfassen der akustischen Informationen Informationen erfasst werden, ausgewählt aus der Gruppe umfassend: Klickgeräuschinformationen, Anschlagsinformationen, Betriebsgeräuschinformationen, Klanginformationen und dergleichen.

Eine vorteilhafte Ausgestaltung der Erfindung sieht vor, dass das optische Erfassen mit einer Auflösung in einem Bereich von größer gleich 0 µm bis kleiner gleich 10 µm, bevorzugt in einem Bereich von größer gleich 0 µm bis kleiner gleich 5 µm und am meisten bevorzugt in einem Bereich von 0 µm bis kleiner gleich 1 µm durchgeführt wird. Diese hohe Auflösung sichert einen hohen Qualitätsstandart.

Gleiche gilt für das bevorzugte Ausführungsbeispiel, bei dem das haptische Erfassen in einem Temperaturbereich mit einer Auflösung in einem Bereich von größer gleich 0°C bis kleiner gleich 10 °C, bevorzugt in einem Bereich von größer gleich 0°C bis kleiner gleich 5°C und am meisten bevorzugt in einem Bereich von größer 0°C bis kleiner gleich 1°C und/oder das kräftemäßige Erfassen in einem Kraftgrößenbereich mit einer Auflösung in einem Bereich von größer gleich 0 N oder 0 Nm bis kleiner gleich 10 N oder 10 Nm, bevorzugt in einem Bereich von größer gleich 0 N oder 0 Nm bis kleiner gleich 5 N oder 5 Nm und am meisten bevorzugt in einem Bereich von größer gleich 0 N oder 0 Nm bis kleiner gleich 1 N oder 1 Nm durchgeführt wird.

Ebenso ist es vorteilhaft, dass das akustische Erfassen in einem Frequenzbereich mit einer Auflösung in einem Bereich von größer gleich 0 Hz bis kleiner gleich 150 kHz, bevorzugt in einem Bereich von größer gleich 0 Hz bis kleiner gleich 100 kHz, und am meisten bevorzugt in einem Bereich von größer gleich 0 Hz bis kleiner gleich k50 Hz, besonders bevorzugt um 44,1 kHz durchgeführt wird.

Besonders bevorzugt ist es, um einen hohen Qualitätsstandart zu gewährleisten, dass zumindest einer der Schritte mehrfach ausgeführt wird, um die Präzision des Schritts zu erhöhen, bis ein Abbruchkriterium erfüllt ist. So kann iterativ die Präzision je nach Bedarf gesteigert werden, entweder für den gesamten Prozess oder nur für einzelne Kontrollen.

Aufgrund der hohen Taktraten und dem zunehmenden Zeitdruck ist es vorteilhaft, dass die Schritte selbsttätiges Ausrichten und reproduzierbares Durchführen einer Einzelkontrolle in einer Taktrate in einem Bereich von größer gleich 0 Sekunden bis kleiner gleich 3600 Sekunden, bevorzugt in einem Bereich von größer gleich 0 Sekunden bis kleiner gleich 1800 Sekunden und am meisten bevorzugt in einem Bereich von größer gleich 0 Sekunden bis kleiner gleich 900 Sekunden durchgeführt werden.

Zur Steigerung des Komforts der Bedienung des Programms, beispielsweise von Eingriffen, und zur Reduzierung von Kabel und anderen Übertragungsmedienmaterialien, ist es vorteilhaft, dass mindestens einer der Schritte akustisch über ein Spracherkennungs- und/oder -eingabesystem gesteuert wird. Somit kann ein Bediener beide Hände frei halten und gegebenenfalls andere Tätigkeiten damit verrichten, wenn er Anweisungen für den Roboter gibt. Dies erhöht die Effizienz des Verfahrens. Insbesondere bei Notfällen oder Störungen kann in die Steuerung auch über weitere Entfernungen eingegriffen werden.

Auch vorteilhaft ist es, dass bei mindestens einem Schritt die Informationen kabellos mittels eines kabellosen Verfahren ausgewählt aus der Gruppe umfassend WLAN, bluetooth und dergleichen ausgeführt wird. Dies reduziert den Materialaufwand und gestaltet die Übertragung, zum Beispiel auch an mehrere Stellen einfacher.

Die technische Lehre sieht weiter vor, dass Computerprogramm mit Programmcode-Mitteln vorgesehen sind, um alle Schritte von jedem beliebigen der vorbeschriebenen Verfahren durchzuführen, wenn das Programm auf einem Computer ausgeführt wird. Gleiches gilt für ein Computerprogrammprodukt mit Programmcode-Mitteln, die auf einem computerlesbaren Datenträger gespeichert sind, um ein beliebiges vorbeschriebenes Verfahren durchzuführen, wenn das Programmprodukt auf einem Computer ausgeführt wird. Somit kann das Verfahren einfach auf andere Systeme übertragen und dort ausgeführt werden.

Die technische Lehre der Erfindung sieht weiter vor, dass ein System mit Mitteln zur Durchführung des erfindungsgemäßen Verfahrens vorgesehen ist.

Auf diese Weise lässt sich das Verfahren auch praktisch in verschiedenen Gebieten einsetzen.

Wie schon vorstehend erwähnt, umfasst das System einen Roboter mit mindestens einem Lagesensor und mindestens eine Prüfvorrichtung. Unter Roboter ist hier jede Art von Manipulatoren, insbesondere die vollautomatischen Manipulatoren zu verstehen.

Bevorzugt ist, dass die Prüfvorrichtung mindestens eine Funktionstesteinheit und mindesten einen Sensor zur Erfassung des Feedbacks der Funktionstesteinheit umfasst. Somit können die an Bauteilen hinterlegten Funktionen automatisch kontrolliert werden, welche bislang nur manuell getestet werden konnten.

Weiter bevorzugt ist, dass mindestens einer der Sensoren als Mikrosensor ausgebildet ist. Auf diese Weise lässt sich die Prüfungsvorrichtung klein ausbilden, wobei der Mikrosensor aufgrund beispielsweise seines Gewichts die Kontrolle nur minimal beeinflusst.

Eine Ausführungsform sieht bevorzugt vor, dass der Mikrosensor Mittel zum Erfassen von Kraftgrößen umfassend Drehmoment und Kraft, thermischen Größen umfassend die Temperatur, optischen Größen und/oder haptischen Größen aufweist. Hiermit lassen sich alle relevanten Informationen für die vollautomatische Endkontrolle erfassen.

Darüber hinaus ist es vorteilhaft, dass die Mittel zum Erfassen der Kraftgrößen mindestens einen Piezo-Resistor zum Erfassen eines Drehmoments und/oder einer Kraft umfassen. Dieser liefert zuverlässige Ergebnisse und ist kleinbauend, wodurch Bauraum eingespart werden kann.

Bevorzugt ist, dass die Mittel zum Erfassen der thermischen Größe mindestens ein Thermoelement umfassen.

Ein weiterer Vorteil der Erfindung liegt darin, dass die Mittel zum Erfassen einer haptischen Größe eine Vielzahl an Rezeptoren umfassen, die nach Art eins haptischen Fingers fungieren. Somit werden die menschlichen haptischen Sinnesempfindungen optimal nachgebildet und es kann somit eine optimierte Endkontrolle durchgeführt werden.

Um möglichst viele Rezeptoren und somit dann auch viele Mikrosensoren auf einem kleinen Bauraum unterzubringen, ist es bevorzugt, dass die Vielzahl an Rezeptoren zum Erfassen der haptischen Größe auf einem Mikrosensor mit einer Grundfläche in einem Bereich von kleiner gleich 50 mm x 50 mm, bevorzugt in einem Bereich von kleiner gleich 25 mm x 25 mm und besonders von 15 mm x 15 mm angeordnet sind. Der Mikrosensor mit der Vielzahl an Rezeptoren weist einen Grundkörper auf, an oder in dem die Rezeptoren angeordnet sind. Der Grundkörper kann dabei beliebig genormt sein, weist bevorzugt in der Draufsicht jedoch eine rechteckige, bevorzugt quadratische Grundfläche auf. Je kleiner die Rezeptoren ausgebildet sind, desto kleiner kann auch der Grundkörper bzw. dessen Grundfläche sein.

Ein Vorteil der vorliegenden Erfindung sieht vor, dass mindestens ein Sensor als mehrachsiger Kraft-Moment-Sensor zur Erfassung von Kräften und Momenten in mindestens eine, bevorzugt in mehrere unterschiedliche Richtungen zum Erfassen von Orientierungsdaten ausgebildet ist. Zum Beispiel kann der Kraft-Moment-Sensor Kräfte und/oder Momente beziehungsweise deren Komponenten, beispielsweise in einem dreidimensionalen kartesischen Koordinatensystem um entlang der drei Achsen und/oder um die drei Achsen erfassen. Auch hier sind beliebige Koordinatensysteme anwendbar.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen: .
- Fig. 1: eine schematische Draufsicht auf ein erfindungsgemäßes System zum Durchführen des erfindungsgemäßen Verfahrens,
- Fig. 2a bis 2e: schematisch den Aufbau eines Mikrosensors mit Rezeptoren, und
- Fig. 3: schematisch einen Ablauf des erfindungsgemäßen Verfahrens.

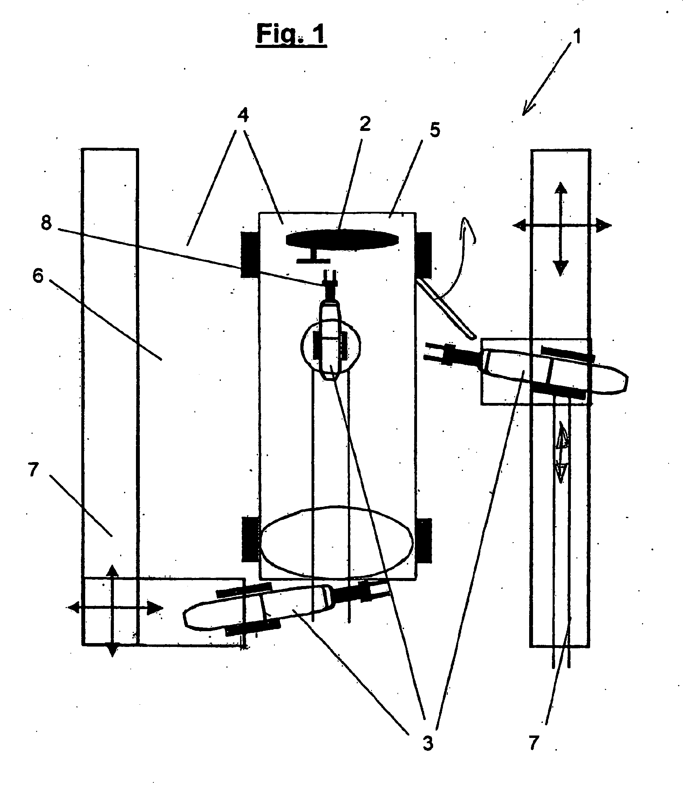

Fig.1 zeigt eine schematische Draufsicht eines Systems 1 zum Durchführen des erfindungsgemäßen Verfahrens zur vollautomatischen Endkontrolle von Bauteilen 2 und dergleichen.

Das System 1 umfasst gemäß Fig. 1 drei Roboter 3. Die Roboter 3 und die zu prüfenden Bauteile sind vor Begin der Endkontrolle in unterschiedlichen Raumstrukturen 4 angeordnet. Eine Raumstruktur 4 ist in diesem Ausführungsbeispiel ein schematisch dargestelltes Kraftfahrzeug 5. In dem Kraftfahrzeug 5 ist ein als Kraftfahrzeugcockpit ausgebildetes Bauteil 2 angeordnet. Außerhalb des Kraftfahrzeugs 5 sind in einer als Prüfraum 6 ausgebildeten anderen Raumstruktur 4 vor Begin der Endkontrolle die Roboter 3 angeordnet.

Die Roboter 3 sind verfahrbar angeordnet, wobei in dem in Fig. 1 dargestellten Zustand des Systems zwei der Roboter 3 außerhalb des Kraftfahrzeugs 5 und einer der Roboter 3 bereits in das Kraftfahrzeug 5 eingefahren dargestellt sind. Zum Verfahren der Roboter 3 sind diese auf entsprechenden Verfahreinrichtungen 7 angeordnet, genauer Verfahrtischen wie - hier vorliegend dargestellt - Kreuztischen. Diese sind bevorzugt als zweiachsige, linear verfahrende Kreuztische ausgebildet. Die Roboter weisen hier nicht explizit dargestellte Messsensoren zum Verarbeiten von Orientierungsdaten auf, anhand derer der Roboter sich in den Raumstrukturen orientieren kann. Die Orientierung im Raum und die Objekterfassung erfolgt über zweioder dreidimensionale Sensoren, die endseitig an jedem Roboterarm angeordnet sind. Das Anfahren der Mess-Referenzpunkte erfolgt in Bereich von +/- 2,5 mm.

Jeder Roboterarm trägt ferner eine Prüfvorrichtung 8 zur Durchführung von Einzelkontrollen an einem zu prüfenden Bauteil 2 oder an einer zu prüfenden Komponente. Die Prüfvorrichtung 8 dient dazu, Daten über das zu prüfende Bauteil 2 zu verarbeiten - genauer zu erfassen - und um eine Einzelkontrolle beispielsweise einer Funktionseinheit eines Bauteils durchzuführen und die Resultate der Einzelkontrolle oder das Feedback des Bauteils bei der Einzelkontrolle zu erfassen.

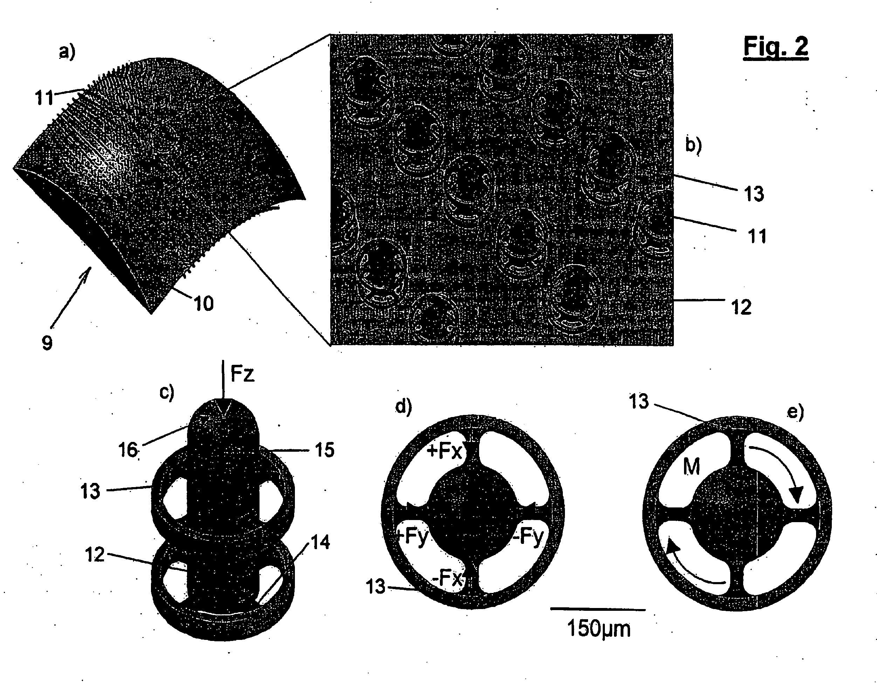

Für die Erfassung des Feedbacks, beispielsweise des haptisch erfassbaren Feedbacks sind besondere Messsensoren erforderlich. Ein Messsensor 9 auch zur haptischen Erfassung ist in den Fig. 2a bis e näher dargestellt.

Fig. 2a zeigt schematisch einen als Mikrosensor ausgebildeten Messsensor 9. Der Mikrosensor ist als dreidimensionaler Mikrosensor ausgebildet, der Oberflächen- und/oder Kraftinformationen über dreidimensionale Bauteile haptisch erfassen kann. Der Mikrosensor weist einen Grundkörper 10 auf, auf dem eine Vielzahl von Rezeptoren 11 ausgebildet und/oder angeordnet ist. Mit dieser Vielzahl an Rezeptoren 11 lässt sich beispielsweise eine dreidimensionale Oberfläche haptisch erfassen, da diese unter anderem wie ein "haptischer Finger" wirken.

Fig. 2b zeigt schematisch einen Ausschnitt des Mikrosensors gemäß Fig. 2a. Hierbei ist die Anordnung und die Ausformung der Rezeptoren 11 dargestellt. Die Rezeptoren 11 sind dabei bevorzugt feldförmig, insbesondere auch in mehreren Reihen nebeneinander angeordnet. Die Form der Rezeptoren 11 ist in etwa vergleichbar mit einer Achse oder Welle 12, die an beiden Enden etwa radförmige Teile 13 aufweist, wobei die Achse oder Welle 12 an einem radförmigen Teil 13 weiter hervorragt, als an dem an dessen anderer Seite angeordneten radförmigen Teil 13. Genauer geht die Ausbildung eines Rezeptors 11 aus Fig. 2c hervor.

Fig. 2c zeigt schematisch vergrößert, in einer perspektivischen Ansicht einen Rezeptor 11 des Mikrosensors. Dabei weisen die radförmigen Teile 13 vier speichenartige Verbindungsbereiche 14 auf, welche mit der Welle 12 verbunden sind. Ein radförmiges Teil 13 schließt etwa bündig mit einem Ende der Welle 12 (oder Achse) ab. Das zweite radförmige Teil 13 ist im Wesentlichen gleich ausgebildet, wie das erste radförmige Teil 13 und weist ebenfalls speichenartige Verbindungsbereiche 14 auf, welche mit der Welle 12 verbunden sind. Das zweite radförmige Teil 13 ist jedoch nicht an dem anderen Ende der Welle 12, sondern weiter mittig angeordnet, so dass ein Bereich der Welle 12 über dieses zweite radförmige Teil 13 herausragt und einen Vorsprungsbereich 15 bildet. Dieser Vorsprungsbereich 15 ist an dessen äußerem Ende abgerundet, wobei der Vorsprungsbereich 15 zumindest teilweise bevorzugt als Thermoelement 16 zum Erfassen von thermischen Informationen ausgebildet ist.

Die Welle 12 oder Achse des Rezeptors 11 ist vorzugsweise als z-Achse ausgebildet. Die vier speichenartigen Verbindungsbereiche 14 sind bevorzugt im Wesentlichen rechtwinklig zueinander angeordnet und bilden korrespondierend paarweise eine x-Achse und eine y-Achse, so dass der Rezeptor 11 Daten erfassen kann, und diese entsprechend des bevorzugt ausgebildeten Koordinatensystems als kartesische Koordinatenkomponenten verarbeiten kann. Die beiden radförmigen Teile 13 sind äußerlich zueinander korrespondierend ausgebildet, weisen jedoch unterschiedliche Funktionen auf.

Fig. 2d zeigt einen der beiden radförmigen Teile 13 schematisch in einer Draufsicht. Dieses radförmige Teil 13 ist als Piezo-Resistor ausgebildet, wobei dieser zum Kräfteerfassen ausgebildet ist. Dabei werden hauptsächlich Kräftekomponenten in +x, -x, +y, -y Richtungen erfasst, gemäß des zugrunde liegenden kartesischen Koordinatensystems, wie zuvor beschrieben. Diese Kräftekomponenten sind in der Fig. durch entsprechende Bezeichnungen +Fx, -Fx, +Fy, -Fy sowie die zugehörigen Pfeile, welche die Kraftvektoren darstellen, gekennzeichnet.

Fig. 2e zeigt das andere der beiden radförmigen Teile 13 schematisch in einer Draufsicht. Auch dieses Teil ist als Piezo-Resistor ausgebildet, jedoch mit dem Unterschied, dass dieser Piezo-Resistor ausgebildet ist, um Momente zu erfassen, insbesondere Drehmomente um die z-Achse, wie durch das M und die gebogenen Pfeile schematisch dargestellt.

Unter den Fig. 2d, 2e ist eine Maßstabseinheit als Linie dargestellt, deren Länge eine wirkliche Länge von etwa 150 µm repräsentiert. Dieser Maßstab ist nur auf die Fig. 2d und 2e anwendbar.

Der in den Fig. 2a bis 2e dargestellte Mikrosensor ist insbesondere zur Verwendung geeignet in den Einsatzbereichen Betätigungshaptik, Berührungshaptik, Nachbildung der Fingerbeere, haptische Wahrnehmung von Oberflächen, intelligente Schalteroberflächen, intelligente Oberflächen, wobei die gesamte Oberfläche auf Berührung eines Menschen reagiert und/oder wobei die Oberflächen sich gemäß Berührungseinflüssen verformen, wodurch sich die Mikrosensoren auch insbesondere zum Fußgängerschutz und zur Airbaganpassung einsetzen lässt.

Der Mikrosensor ist mit seiner Ausbildung und der Vielzahl an Rezeptoren 11 geeignet, um Kräfte in drei Richtungen, Momente in drei Richtungen, sowie die Berührungstemperatur zu messern.

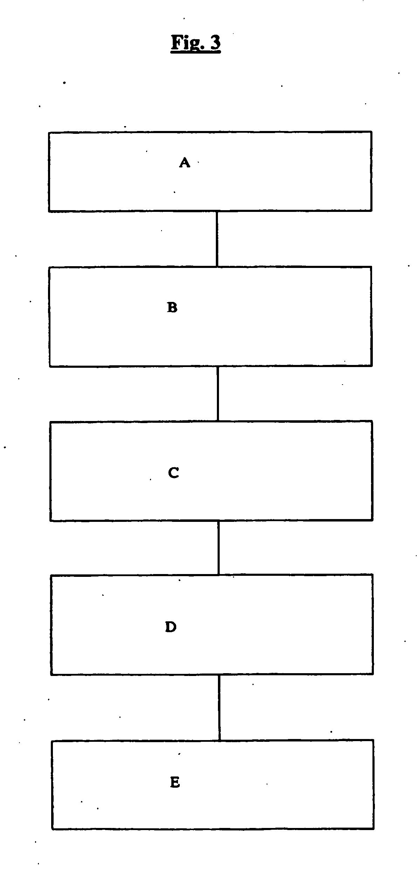

In Fig. 3 ist abstrakt ein Verfahren mit fünf Schritten dargestellt, welches zur vollautomatischen Endkontrolle eingesetzt wird. Die Schritte sind mit den Buchstaben A bis E gekennzeichnet.

Nachdem das zu kontrollierende Objekt, zum Beispiel ein fertig montiertes Kraftfahrzeug in eine Prüfstellung gebracht wurde und gegebenenfalls die Zugangsstelle geöffnet wurde fährt in Schritt A der Roboter, der auf einer Linearachse montiert ist, automatisch in das Kraftfahrzeug hinein.

In Schritt B werden die Informationen über den Prüf- oder Kontrollablauf, welche wie die Soll-Prüfpositionen, bereits offline programmiert bzw. per CAD-Daten festgelegt wurden, abgerufen.

In Schritt C orientiert sich der Roboter in dem Fahrzeugkoordinatennetz und ortet sich dabei automatisch ein bzw. richtet sich selbsttätig aus.

In Schritt D wird nun die IST-Position aus dem programmierten Prüfungsablauf, den CAD-Daten und den Kraftfahrzeugkoordinaten berechnet und die Prüfung bzw. die Durchführung der Kontrolle beginnt. Hierzu werden die entsprechenden Daten in einer Messrobotic verarbeitet.

In Schritt E werden dann die entsprechenden Funktionen des Bauteils oder dessen Funktionseinheiten über die Prüfvorrichtung bzw. den dort ausgebildeten Funktionstester getestet oder kontrolliert. Die einzelnen Fahrzeugkomponenten kommunizieren im Gesamt-Fahrzeugmanagement über ein Fahrzeug-Bus-System, z.B. CAN-, MOST-, LIN- oder Flexray-Busse, und senden ihre Funktionssignale entsprechend der Betätigung durch den Roboter an die übergeordneten Steuergeräte. Nachdem der Roboter den Funktionstest durch Betätigung einer Taste oder eines Reglers eingeleitet hat, wird die Funktions über den mit dem Fahrzeug verbundenen Funktionstester geprüft.

Mit anderen Worten werden in Schritt A Messpunkte für die Bauteile generiert. In Schritt B werden die Fahrzeugkoordinaten verarbeitet. Der Roboter steht nun definiert zu dem Kraftfahrzeug. In Schritt C wird der Offset oder ein Versatz zum Beispiel des Cockpits oder eines Schalters ermittelt, ebenso werden Referenzpunkte im Tastschrittverfahren oder mittels Kraftsensoren ermittelt. In Schritt D erfolgt die Lagevermessung und/oder die Konturerkennung des zu prüfenden einzelnen Bauteils mittels Lichtschnittsensoren oder einem Triangulationsverfahren. Schritt E umfaßt die eigentliche Funktionsprüfung des zu prüfenden Bauteils bzw. der zu prüfenden Komponente.

Die Generierung des gesamten Prüfablaufs kann offline erfolgen, beispielsweise in einem zentralen Büro, und anschließend per eMail oder Datenfernübertragung an jeden beliebigen Produktionsstandort übertragen werden.

Die Erfindung ist nicht auf eine der vorbeschriebenen Ausführungsförmen beschränkt, sondern in vielfältiger Weise abwandelbar. Man erkennt aber, daß der Gegenstand der vorliegenden Erfindung ein System 1 und ein Verfahren zur vollautomatischen Endkontrolle von Bauteilen 2 betrifft, insbesondere deren betätigbaren Funktionseinheiten, mit einem Roboter 3 umfassend eine Prüfvorrichtung 8 zum Durchführen der Endkontrolle, umfassend die Schritte: selbsttätiges Ausrichten des Roboters 3 und/oder der Prüfvorrichtung 8 zu dem zu prüfenden Bauteil 2 und/oder dessen Funktionseinheit anhand von Orientierungsdaten, reproduzierbares Durchführen von Einzelkontrollen mittels der Prüfvorrichtung 8, wobei die Schritte selbsttätiges Ausrichten und reproduzierbares Durchführen wiederholt werden, bis ein Abbruchskriterium erfüllt und/oder die Endkontrolle komplett durchgeführt ist

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombination erfindungswesentlich sein.

### Bezugszeichenliste

- 1: System
- 2: Bauteil
- 3: Roboter
- 4: Raumstruktur
- 5: Kraftfahrzeug
- 6: Prüfraum
- 7: Verfahreinrichtungen
- 8: Prüfvorrichtung
- 9: Messsensor
- 10: Grundkörper
- 11: Rezeptor
- 12: Welle
- 13: radförmiges Teil
- 14: speichenartige Verbindungsteile
- 15: Vorsprungsbereich
- 16: Thermoelement

## Patentansprüche

1. Verfahren zur vollautomatischen Endkontrolle von betätigbaren Funktionseinheiten von Bauteilen (2), mit einem Roboter (3) umfassend eine Prüfvorrichtung (8) zum Durchführen der Endkontrolle, umfassend die Schritte:
■ selbsttätiges Ausrichten des Roboters (3) und/oder der Prüfvorrichtung (8) zu dem zu prüfenden Bauteil (2) und/oder dessen Funktionseinheit anhand von Orientierungsdaten,
■ reproduzierbares Durchführen von Einzelkontrollen mittels der Prüfvorrichtung (8), wobei die Schritte selbsttätiges Ausrichten und reproduzierbares Durchführen wiederholt werden, bis ein Abbruchskriterium erfüllt und/oder die Endkontrolle vollständig durchgeführt ist,
**dadurch gekennzeichnet,**
a) **dass** der Schritt selbsttätiges Ausrichten weiter den Schritt umfasst: Berechnung der Informationen über die mit der Prüfvorrichtung (8) anzufahrende Position für die reproduzierbare Durchführung der Endkontrolle,
b) wobei die Informationen einschließlich der Orientierungsdaten des zu prüfenden Bauteils (2) und/oder dessen betätigbarer Funktionseinheit und/oder der Prüfungsinformationen in einem Teachingverfahren gewonnen werden, und
c) wobei das Teachingverfahren die Schritte umfasst:
○ manuelles Führen des Roboters (3) und/oder der Prüfvorrichtung (8) durch Bewegen eines Messsensors (9) der Prüfvorrichtung (8).
o Erfassen der Informationen über das manuelle Führen und
o abrufbares Ablegen der erfassten Informationen über das manuelle Führen, und
d) **dass** das zu prüfende Bauteil (2) und/oder dessen Funktionseinheit und der Roboter (3) in unterschiedlichen, abgegrenzten, über eine Zugangsstelle verbundenen Raumstrukturen (4) angeordnet sind, bevor das Verfahren durchgeführt wird,
e) wobei die folgenden Schritte ausgeführt werden: Auffinden einer Zugangsstelle und Verfahren des Roboters (3) und/oder der Prüfvorrichtung (8) durch die Zugangsstelle, wobei die Schritte Auffinden und Verfahren vor dem Schritt selbsttätiges Ausrichten durchgeführt werden.

2. Verfahren nach Anspruch 1, weiter umfassend den Schritt: Erfassen, Speichern und/oder Abrufen von Orientierungsdaten des Roboters (3), der Prüfvorrichtung (8), des Bauteils (2) und/oder dessen Funktionseinheiten.

3. Verfahren nach Anspruch 1 oder 2, wobei der Schritt selbsttätiges Ausrichten weiter den Schritt: Verfahren (Bewegen) zumindest eines Roboterarms des Roboters (3) und/oder der Prüfvorrichtung (8) zu erfassten und/oder abgerufenen Orientierungsdaten umfasst.

4. Verfahren nach einem der vorherigen Ansprüche 1 bis 3, wobei der Schritt Erfassen und/oder Speichern von Orientierungsdaten des Roboters (3), der Prüfvorrichtung (8), des Bauteils (2) und/oder dessen Funktionseinheiten den Schritt umfasst: Erfassen und/oder Speichern von Orientierungsdaten des Roboters (3), der Prüfvorrichtung (8), des Bauteils (2) und/oder dessen Funktionseinheiten in Bezug auf vorgegebene Orientierungsdaten.

5. Verfahren nach Anspruch 1, wobei der Schritt Berechnung der Information über die mit der Prüfvorrichtung (8) anzufahrende Position weiter den Schritt umfasst: erechnung der Information über die mit der Prüfvorrichtung (8) anzufahrende Position anhand eines Lageerkennungsalgorithmus.

6. Verfahren nach Anspruch 5, wobei der Schritt Berechnung der Information über die mit der Prüfvorrichtung (8) anzufahrende Position anhand eines Lageerkennungsalgorithmus weiter den Schritt umfasst: Berechnung der Information über die mit der Prüfvorrichtung (8) anzufahrende Position anhand eines Lageerkennungsalgorithmus nach dem Prinzip des Triangulationsverfahrens.

7. Verfahren nach einem der vorherigen Ansprüche 1 bis 6, wobei der Schritt reproduzierbares Durchführen weiter den Schritt umfasst: Berechnen, Erfassen, Speichern und/oder Abrufen der Informationen über das zu prüfende Bauteil (2) oder dessen Funktionseinheit einschließlich der Prüfungsinformationen für die durchzuführende Prüfung.

8. Verfahren nach einem der vorherigen Ansprüche 1 bis 7, wobei der Schritt reproduzierbares Durchführen weiter den Schritt umfasst: Durchführung einer Einzelkontrolle anhand der Prüfungsinformationen.

9. Verfahren nach einem der vorherigen Ansprüche 1 bis 8, wobei der Schritt reproduzierbares Durchführen weiter den Schritt umfasst: Erfassen mindestens einer Information über das Feedback auf die Durchführung der Einzelkontrolle.

10. Verfahren nach einem der Ansprüche 1 bis 9, wobei das Teachingverfahren weiter den Schritt umfasst: Optimierung der erfassten Informationen.

11. Verfahren nach Anspruch 10, wobei das Teachingverfahren weiter die Schritte umfasst:
■ manuelles Durchführen der Einzelkontrolle mittels der Prüfvorrichtung (8),
■ Erfassen der Informationen über das Durchführen der Einzelkontrolle
■ abrufbares Speichern der erfassten Informationen über die Durchführung der Einzelkontrolle.

12. Verfahren nach einem der vorherigen Ansprüche 1 bis 11, wobei das Verfahren an einer Produktionslinie einer getakteten Produktionsstraße durchgeführt wird.

13. Verfahren nach Anspruch 1, wobei eine Raumstruktur (4), in der das zu prüfende Bauteil (2) und/oder dessen Funktionseinheit angeordnet ist, ein Kraftfahrzeug (5) ist.

14. Verfahren nach Anspruch 1 oder 13, weiter umfassend die Schritte:
■ Erfassen der Zugangsstelle und
■ Öffnen der Zugangsstelle, wobei der Schritt Öffnen der Zugangsstelle vor dem Schritt Verfahren des Roboters (3) durch die Zugangsstelle ausgeführt wird.

15. Verfahren nach einem der vorherigen Ansprüche 1 bis 14, wobei der Schritt Verfahren des Roboters (3) mittels Verfahren auf mindestens einer linearen Verfahrachse durchgeführt wird.

16. Verfahren nach einem der vorherigen Ansprüche 1 bis 15, wobei der Schritt Erfassen, Speichern und/oder Abrufen des Bauteils (2) das mehrdimensionale Erfassen. Speichern und/oder Abrufen des Bauteils (2) umfassend Bauteile mit Freiformflächen umfasst.

17. Verfahren nach einem der vorherigen Ansprüche 1 bis 16, wobei das Erfassen des Bauteils (2) mittels einer Dreipunktmessung durchgeführt wird, wobei die Dreipunktmessung auch die Dreipunktmessung in mehr als einer Ebene nach Art eines Triangulationsverfahrens umfasst.

18. Verfahren nach einem der vorherigen Ansprüche 1 bis 17, wobei beim Erfassen, Speichern und/oder Abrufen der Informationen Informationen verarbeitet werden, ausgewählt aus der Gruppe der optischen, akustischen, elektrischen, elektronischen und/oder haptischen Informationen.

19. Verfahren nach einem der vorherigen Ansprüche 1 bis 18, wobei beim Erfassen der optischen Informationen Informationen erfasst werden, ausgewählt aus der Gruppe umfassend Beleuchtungsinformationen, Symbolinformationen, Pixelinformationen, Geometrieinformationen, Spaltmaßinformationen, Farbinformationen, Lichtreflexionsinformationen, Bündigkeitsinformationen, Glanzgradinformationen, Körnungsabstimmungsinformation und dergleichen.

20. Verfahren nach einem der vorherigen Ansprüche 1 bis 19, wobei beim Erfassen der haptischen Informationen Information erfasst werden, ausgewählt aus der Gruppe umfassend Elastizitätsinformationen, Steifigkeitsinformationen, Rückstellrateninformationen, Reibungsinformationen, Rauhigkeitsinformationen, topografische Informationen, gefühlte Temperaturinformationen, Härte, Kraftprofilinformationen, Drehmomentinformationen, stereotype Bedienungsinformation und dergleichen.

21. Verfahren nach einem der vorherigen Ansprüche 1 bis 20, wobei beim Erfassen der akustischen Informationen Informationen erfasst werden, ausgewählt aus der Gruppe umfassend: Klickgeräuschinformationen, Anschlagsinformationen, Betriebsgeräuschinformationen, Klanginformationen und dergleichen.

22. Verfahren nach einem der vorherigen Ansprüche 1 bis 21, wobei das optische Erfassen mit einer Auflösung in einem Bereich von größer gleich 0 µm bis kleiner gleich 10 µm, bevorzugt in einem Bereich von größter gleich 0 µm bis kleiner gleich 5 µm und am meisten bevorzugt in einem Bereich von 0 µm bis kleiner gleich 1 µm durchgeführt wird.

23. Verfahren nach einem der vorherigen Ansprüche 1 bis 22, wobei das haptische Erfassen in einem Temperaturbereich mit einer Auflösung In einem Bereich von größer gleich 0°C bis kleiner gleich 10 °C, bevorzugt in einem Bereich von größer gleich 0°C bis kleiner gleich 5°C und am meisten bevorzugt in einem Bereich von größer 0°C bis kleiner gleich 1°C und oder das kräftemäßige Erfassen in einem Kraftgrößenbereich mit einer Auflösung in einem Bereich von größer gleich 0 N oder 0 Nm bis kleiner gleich 10 N oder 10 Nm, bevorzugt in einem Bereich von größer gleich 0 N oder 0 Nm bis kleiner gleich 5 N oder 5 Nm und am meisten bevorzugt in einem Bereich von größer gleich 0 N oder 0 Nm bis kleiner gleich 1 N oder 1 Nm durchgeführt wird.

24. Verfahren nach einem der vorherigen Ansprüche 1 bis 23, wobei das akustische Erfassen in einem Frequenzbereich mit einer Auflösung in einem Bereich von größer gleich 0 Hz bis kleiner gleich 150 kHz, bevorzugt in einem Bereich von größer gleich 0 Hz bis kleiner gleich 100 kHz, und am meisten bevorzugt in einem Bereich von größer gleich 0 Hz bis kleiner gleich k50 Hz, besonders bevorzugt um 44,1 kHz durchgeführt wird.

25. Verfahren nach einem der vorherigen Ansprüche 1 bis 24, wobei zumindest einer der Schritte mehrfach ausgeführt wird, um die Präzision des Schritts zu erhöhen, bis ein Abbruchskriterium erfüllt ist.

26. Verfahren nach einem der vorherigen Ansprüche 1 bis 25, wobei die Schritte selbsttätiges Ausrichten und reproduzierbares Durchführen einer Einzelkontrolle in einer Taktrate in einem Bereich von größer gleich 0 Sekunden bis kleiner gleich 3600 Sekunden, bevorzugt in einem Bereich von größer gleich 0 Sekunden bis kleiner gleich 1800 Sekunden und am meisten bevorzugt in einem Bereich von größer gleich 0 Sekunden bis kleiner gleich 900 Sekunden durchgeführt wird.

27. Verfahren nach einem der vorherigen Ansprüche 1 bis 26, wobei mindestens einer der Schritte akustisch über ein Spracherkennungs- und/oder eingabesystem gesteuert wird.

28. Verfahren nach einem der vorherigen Ansprüche 1 bis 27, wobei bei mindestens einem Schritt die Informationen kabellos mittels einem kabellosen Verfahren ausgewählt aus der Gruppe umfassend WLAN, bluetooth und dergleichen ausgeführt wird.

29. Computerprogramm mit Programmcode-Mitteln, um alle Schritte von jedem beliebigen der Ansprüche 1 bis 28 durchzuführen, wenn das Programm auf einem Computer ausgeführt wird.

30. Computerprogrammprodukt mit Programmcode-Mitteln, die auf einem computeriesbaren Datenträger gespeichert sind, um das Verfahren nach jedem beliebigen der Ansprüche 1 bis 28 durchzuführen, wenn das Programmprodukt auf einem Computer ausgeführt wird.

31. System (1) mit angepassten Mitteln zur Durchführung des Verfahrens nach einem der vorherigen Ansprüche 1 bis 28.

32. System (1) nach Anspruch 31, wobei das System (1) einen Roboter (3) mit mindestens einem Lagesensor und mindestens eine Prüfvorrichtung (8) umfasst.

33. System (1) nach Anspruch 31 oder 32, wobei die Prüfvorrichtung (8) mindestens eine Funktionstesteinheit und mindesten einen Sensor zur Erfassung des Feedbacks der Funktionstesteinheit umfasst.

34. System nach einem der vorherigen Ansprüche 31 bis 33, **dadurch gekennzeichnet dass** mindestens ein Sensor als mehrachsiger Kraft-Moment-Sensor zur Erfassung von Kräften und drei Momenten in drei unterschiedlichen Richtungen zum Erfassen von Orientierungsdaten ausgebildet ist.

## Claims

1. Method for the automatic master control of operable functional units of components (2) by a robot (3) including a testing device (8) to execute a master control including the following steps:
• self-positioning of the robot (3) and/or the testing device (8) to the component (2) to be tested, and/or its functional unit by way of orientation data,
• consistent execution of individual controls with the testing device (8), with the self-positioning- and consistent execution steps being repeated until a termination criterion is met, and/or the master control is entirely completed,
**characterized by**
a) the self-positioning step further comprising the step: calculation of the information of the position to be taken by the testing device (8) for the consistent execution of the master control,
b) and the information including the orientation data of the component (2) to be controlled, and/or of its operable functional unit, and/or of the test information data being collected in a teaching process, and
c) with the teaching process comprising the steps:
o manual control of the robot (3) and/or the testing device (8) by actuating a test sensor (9) of the testing device (8),
o information collection by the manual control, and
o retrievable filing of the collected information by the manual control, and
d) the component to be controlled (2), and/or its functional unit, and the robot (3) being arranged in different, delimited space structures (4) connected by an access point before the process is started,
e) and the following steps being executed: location of an access point and driving the robot (3) and/or testing device (8) through the access point, with the steps location and driving being executed before the step self-positioning.

2. Procedure according to Claim 1 further comprising the steps: collection, storage, and/or retrieval of orientation data of the robot (3), the testing device (8), the component (2), and/or its functional units.

3. Procedure according to Claims 1 or 2 with the step self-positioning further comprising the step: driving (moving) of at least one robot arm of the robot (3) and/or of the testing device (8) to collected and/or retrieved orientation data.

4. Procedure according to one of the preceding Claims 1 to 3, with the step collection and/or storage of orientation data of the robot (3), of the testing device (8), of the component (2), and/or of its functional units comprising the step: collection and/or storage of orientation data of the robot (3), of the testing device (8), of the component (2), and/or its functional units in relation to preset orientation data.

5. Procedure according to Claim 1, with the step calculation of the information of the position to be taken by the testing device (8) further comprising the step: calculation of the information of the position to be taken by the testing device (8) by means of a position sensing algorithm.

6. Procedure according to Claim 5, with the step calculation of the information of the position to be taken by the testing device (8) by means of a position sensing algorithm further comprising the step: calculation of the information of the position to be taken by the testing device (8) by means of a position sensing algorithm according to the triangulation method principle.

7. Procedure according to one of the preceding Claims 1 to 6, with the step consistent execution further comprising the step: calculation, collection, storage, and/or retrieval of the information of the component (2) to be tested or its functional unit including the test information data for the test to be executed.

8. Procedure according to one of the preceding Claims 1 to 7, with the step consistent execution further comprising the step: execution of an individual control by means of the test information data.

9. Procedure according to one of the preceding Claims 1 to 8, with the step consistent
execution further comprising the step: collection of at least one information on the feedback
about the execution of the individual control.

10. Procedure according to one of the Claims 1 to 9, with the teaching process further comprising the step: optimization of the collected information.

11. Procedure according to Claim 10, with the teaching process further comprising the steps:
• manual execution of the individual control by means of the testing device (8),
• collection of the information of the execution of the individual control
• retrievable storage of the collected information of the execution of the individual control.

12. Procedure according to one of the preceding Claims 1 to 11, with the procedure being executed at the production line of an intermittent production line.

13. Procedure according to Claim 1, with the space structure (4) in which the component (2) to be tested and/or its functional unit are arranged in a motor vehicle (5).

14. Procedure according to Claims 1 or 13, further comprising the steps:
• detection of the access point and
• opening of the access point, with the step opening of the access point being executed before the step driving of the robot (3) through the access spot.

15. Procedure according to one of the Claims 1 to 14, with the step driving of the robot (3) being done by traveling on at least one linear travel axis.

16. Procedure according to one of the preceding Claims 1 to 15, with the step detection, storage, and/or retrieval of the component (2) comprising the multidimensional detection, storage, and/or retrieval of the component (2) also including components with free-form surfaces.

17. Procedure according to one of the preceding Claims 1 to 16, with the detection of the component (2) being done by means of a three-point measuring and such three-point measuring comprising also three-point measuring in more than one plane, like a triangulation method.

18. Procedure according to one of the preceding Claims 1 to 17, with the collection, storage,
and/or retrieval of information such information being processed as chosen from the group
of optical, acoustic, electrical, electronic, and/or haptic information data.

19. Procedure according to one of the preceding Claims 1 to 18, with the collection of optical information data such information being collected as chosen from the group comprising illumination information, symbol information, pixel information, geometry information, gap clearance information, color information, luminous reflectance information, evenness information, gloss coefficient information, granularity matching information, and the like.

20. Procedure according to one of the preceding Claims 1 to 19, with the collection of haptic information data such information data being collected as chosen from the group comprising elasticity information, stiffness information, resetting rate information, friction information, surface roughness information, topographic information, felt temperature information, hardness, force profile information, torque information, stereotype operating information, and the like.

21. Procedure according to one of the preceding Claims 1 to 20, with the collection of acoustic information data such information data being collected as chosen from the group comprising: click-sound information, limit stop striking noise information, operating noise information, sound information, and the like.

22. Procedure according to one of the preceding Claims 1 to 21, with the optical detection being executed at a resolution ranging from greater than or equal to 0 µm to less than or equal to 10 µ, preferably from greater than or equal to 0 µ to less than or equal to 5 µ, and
most preferably from 0 µ to less than or equal to 1 µ.

23. Procedure according to one of the preceding Claims 1 to 22, with the haptic detection
being executed in a temperature range at a resolution ranging from greater than or equal to
0° C to less than or equal to 10° C, preferably from greater than or equal to 0° C to less than or equal to 5° C, and most preferably from greater than or equal to 0° C to less than or equal to 1 ° C, and or the force detection being executed in a force unit range at a resolution ranging from greater than or equal to 0 N or 0 Nm to less than or equal to 10 N or Nm, preferably from greater than or equal to 0 N or 0 Nm to less than or equal to 5 N
or
5 Nm, and most preferably from greater then or equal to 0 N or 0 Nm to less than or equal
to 1 N or 1 Nm.

24. Procedure according to one of the preceding Claims 1 to 23, with the acoustic detection
being executed in a frequency range at a resolution ranging from greater than or equal to 0
Hz to less than or equal to 150 kHz, preferably from greater than or equal to 0 Hz to less than or equal to 100 kHz, and most preferably from greater than or equal to 0 Hz to less than or equal to k50 Hz, and to around 44,1 kHz as absolute preference.

25. Procedure according to one of the preceding Claims 1 to 24, with at least one of the steps
being repeatedly executed to increase the precision of such step, until a termination criterion has been met.

26. Procedure according to one of the preceding Claims 1 to 25, with the steps self-positioning and consistent execution of an individual control being executed at a timing rate ranging from greater than or equal to 0 seconds to less than or equal to 3600 seconds,
preferably from greater than or equal to 0 seconds to less than or equal to 1800 seconds, and most preferably from greater than or equal to 0 seconds to less than or equal to 900 seconds.

27. Procedure according to one of the preceding Claims 1 to 26, with at least one of the steps
being acoustically controlled by a voice-detecting or input system.

28. Procedure according to one of the preceding Claims 1 to 27, with at least for one step the information is being executed wireless by means of a wireless procedure chosen from the group comprising WLAN, Bluetooth, and the like.

29. Computer program with program code means to execute all steps of whatever of the Claims 1 to 28 when the program is performed on a computer.

30. Computer program product with program code means stored on a computer-readable data
medium to execute the procedure according to whatever of the Claims 1 to 28 when the program product is performed on a computer.

31. System (1) with adapted means to execute the procedure according to one of the preceding
Claims 1 to 28.

32. System (1) according to Claim 31 with the system (1) comprising a robot (3) with at least one position sensor and at least one testing device (8).

33. System (1) according to Claims 31 or 32 with the testing device (8) comprising at least one function test unit and at least one sensor to collect the feedback of the function test unit.

34. System according to one of the preceding Claims 31 to 33 **characterized by** at least one sensor being designed as a multi-axis force-moment-sensor to detect forces and three moments of force in three different directions for the collection of orientation data.

## Revendications

1. Procédé pour le contrôle final entièrement automatique d'unités fonctionnelles manoeuvrables d'éléments constitutifs (2), avec un robot (3) comprenant un dispositif d'essai (8) pour la réalisation du contrôle final, comprenant les étapes :
• orientation automatique du robot (3) et/ou du dispositif d'essai (8) par rapport à l'élément constitutif (2) à contrôler et/ou à l'unité fonctionnelle de ce dernier, à l'aide de données d'orientation,
• réalisation reproductible de contrôles individuels au moyen du dispositif d'essai (8), les étapes d'orientation automatique et de réalisation reproductible se répétant, jusqu'à ce qu'un critère d'interruption soit rempli et/ou jusqu'à ce que le contrôle final soit entièrement réalisé,
**caractérisé en ce que,**
a) l'étape d'orientation automatique comprend par ailleurs l'étape : calcul des informations concernant la position à aborder avec le dispositif d'essai (8) pour la réalisation reproductible du contrôle final,
b) les informations, y-compris les données d'orientation de l'élément constitutif (2) et ou de l'unité fonctionnelle manoeuvrable de ce dernier et/ou les informations d'essai étant récupérées dans un procédé didacticiel, et
c) le procédé didacticiel comprenant les étapes :
• guidage manuel du robot (3) et/ou du dispositif d'essai (8) par déplacement d'un capteur de mesure (9) du dispositif d'essai (8),
• détection de l'information par l'intermédiaire du guidage manuel et
• sauvegarde interrogeable des informations détectées par l'intermédiaire du guidage manuel et
d) **en ce que** l'élément constitutif (2) et/ou son unité fonctionnelle et le robot (3) sont disposés dans différentes structures spatiales (4) délimitées, reliées par l'intermédiaire d'un point d'accès, avant que le procédé ne soit réalisé,
e) les étapes suivantes étant effectuées : recherche d'un point d'accès et déplacement du robot (3) et ou du dispositif d'essai (8) à travers le point d'accès, les étapes de recherche et de déplacement étant réalisées avant l'étape d'orientation automatique.

2. Procédé selon la revendication 1, comprenant par ailleurs l'étape : détection, mise en mémoire et/ou interrogation de données d'orientation du robot (3), du dispositif d'essai (8), de l'élément constitutif (2) et/ou des unités fonctionnelles de ce dernier.

3. Procédé selon la revendication 1 ou 2, l'étape d'orientation automatique comprenant par ailleurs l'étape de déplacement (mise en mouvement) d'au moins un bras de robot du robot (3) et/ou du dispositif d'essai (8) selon des données d'orientation détectées et/ou interrogées.

4. Procédé selon l'une quelconque des revendications précédentes 1 à 3, l'étape de détection et/ou de mise en mémoire de données d'orientation du robot (3), du dispositif d'essai (8), de l'élément constitutif (2) et/ou des unités fonctionnelles de ce dernier comprenant l'étape : détection et/ou mise en mémoire de données d'orientation du robot (3), du dispositif d'essai (8), de l'élément constitutif (2) et/ou des unités fonctionnelles de ce dernier, en référence à des données d'orientation prédéfinies.

5. Procédé selon la revendication 1, l'étape de calcul de l'information par l'intermédiaire de la position à aborder par le dispositif d'essai (8) comprenant par ailleurs l'étape : calcul de l'information par l'intermédiaire de la position à aborder par le dispositif d'essai (8) à l'aide d'un algorithme de reconnaissance de position.

6. Procédé selon la revendication 5, l'étape de calcul de l'information par l'intermédiaire de la position à aborder par le dispositif d'essai (8) à l'aide d'un algorithme de reconnaissance de position comprenant par ailleurs l'étape : calcul de l'information par l'intermédiaire de la position à aborder par le dispositif d'essai (8) à l'aide d'un algorithme de reconnaissance de position selon le principe du procédé de triangulation.

7. Procédé selon l'une quelconque des revendications précédentes 1 à 6, l'étape de réalisation reproductible comprenant par ailleurs l'étape : calcul, détection, mise en mémoire et/ou interrogation des informations par l'intermédiaire de l'élément constitutif (2) à contrôler ou de l'unité fonctionnelle de ce dernier, y compris des informations d'essai pour l'essai à réaliser.

8. Procédé selon l'une quelconque des revendications précédentes 1 à 7, l'étape de réalisation reproductible comprenant en outre l'étape : réalisation d'un contrôle individuel à l'aide des informations d'essai.

9. Procédé selon l'une quelconque des revendications précédentes 1 à 8, l'étape de réalisation reproductible comprenant par ailleurs l'étape : détection d'au moins une information par l'intermédiaire de la rétroaction sur la réalisation du contrôle individuel.

10. Procédé selon l'une quelconque des revendications 1 à 9, le procédé didacticiel comprenant par ailleurs l'étape : optimisation des informations détectées.

11. Procédé selon la revendication 10, le procédé didacticiel comprenant par ailleurs les étapes :
• réalisation manuelle du contrôle individuel au moyen du dispositif d'essai (8),
• détection des informations par l'intermédiaire de la réalisation du contrôle individuel
• mise en mémoire interrogeable des informations détectées par l'intermédiaire de la réalisation du contrôle individuel.

12. Procédé selon l'une quelconque des revendications précédentes 1 à 11, le procédé étant réalisé sur une ligne de production d'une chaîne de production cadencée.

13. Procédé selon la revendication 1, une structure spatiale (4) dans laquelle l'élément constitutif (2) à contrôler et/ou son unité fonctionnelle est disposé étant un véhicule automobile (5).

14. Procédé selon la revendication 1 ou 13, comprenant par ailleurs les étapes :
• détection du point d'accès
• ouverture du point d'accès, l'étape de l'ouverture du point d'accès étant réalisée avant l'étape de déplacement du robot (3) à travers le point d'accès.

15. Procédé selon l'une quelconque des revendications précédentes 1 à 14, les étapes de déplacement du robot (3) étant réalisées au moyen d'un déplacement sur au moins un axe de déplacement linéaire.

16. Procédé selon l'une quelconque des revendications précédentes 1 à 15, l'étape de détection, de mise en mémoire et/ou d'interrogation de l'élément constitutif (2) comprenant la détection multidimensionnelle, la mise en mémoire et/ou l'interrogation de l'élément constitutif (2) comprenant des éléments constitutifs avec des surfaces de forme libre.

17. Procédé selon l'une quelconque des revendications précédentes 1 à 16, la détection de l'élément constitutif (2) étant réalisée au moyen d'une mesure sur trois points, la mesure sur trois points comprenant également la mesure sur trois points dans plus d'un plan, à la manière d'un procédé de triangulation.

18. Procédé selon l'une quelconque des revendications précédentes 1 à 17, des informations choisies dans le groupe des informations optiques, acoustiques, électriques, électroniques et/ou haptiques étant traitées à la détection et/ou à l'interrogation des informations.

19. Procédé selon l'une quelconque des revendications précédentes 1 à 18, des informations choisies dans le groupe comprenant des informations d'éclairage, des informations de symboles, des informations de pixels, des informations géométriques, des informations de dimensions de fentes, des informations de teinte, des informations de réflexion lumineuse, des informations d'affleurement, des informations de taux de luisance, des informations d'ajustage granulométrique et similaires étant détectées lors de la détection des informations optiques.

20. Procédé selon l'une quelconque des revendications précédentes 1 à 19, des informations choisies dans le groupe comprenant des informations d'élasticité, des informations de rigidité, des informations sur les taux de rappel, des informations de frottement, des informations de rugosité, des informations topographiques, des informations de température captées, la dureté, des informations sur les profils de force, des informations sur les couples de rotation, des informations de stéréotypes de commande et similaires étant détectées lors de la détection des informations haptiques.

21. Procédé selon l'une quelconque des revendications précédentes 1 à 20, des informations choisies dans le groupe comprenant : des informations sur les bruits de cliquetis, des informations de butée, des informations sur les bruits de fonctionnement, des informations de sonorité et similaires étant détectées lors de la détection des informations acoustiques.

22. Procédé selon l'une quelconque des revendications précédentes 1 à 21, la détection optique étant réalisée avec une résolution de l'ordre compris entre supérieur ou égal à 0 µm et inférieur ou égal à 10 µm, de préférence de l'ordre compris entre supérieur ou égal à 0 µm et inférieur ou égal à 5 µm et de façon la plus préférée de l'ordre compris entre 0 µm et inférieur ou égal à 1 µm.

23. Procédé selon l'une quelconque des revendications précédentes 1 à 22, la détection haptique étant réalisée dans un ordre de température avec une résolution de l'ordre compris entre supérieur ou égal à 0°C et inférieur ou égal à 10°C, de préférence de l'ordre compris entre supérieur ou égal à 0°C et inférieur ou égal à 5°C et de façon la plus préférée de l'ordre compris entre supérieur à 0°C et inférieur ou égal à 1°C et/ou la détection du point de vue des forces étant réalisée dans un ordre de dimensions de force avec une résolution de l'ordre compris entre supérieur ou égal à 0 N ou 0 Nm et inférieur ou égal à 10 N ou 10 Nm, de préférence de l'ordre compris entre supérieur ou égal à 0 N ou 0 Nm et inférieur ou égal à 5 N ou 5 Nm et de façon la plus préférée de l'ordre compris entre supérieur ou égal à 0 N ou 0 Nm et inférieur ou égal à 1 N ou 1 Nm.

24. Procédé selon l'une quelconque des revendications précédentes 1 à 23, la détection acoustique étant réalisée dans une plage de fréquences avec une résolution de l'ordre compris entre supérieur ou égal à 0 Hz et inférieur ou égal à 150 kHz, de préférence de l'ordre compris entre supérieur ou égal à 0 Hz et inférieur ou égal à 100 kHz et de façon la plus préférée, de l'ordre compris entre supérieur ou égal à 0 Hz et inférieur ou égal à k50 Hz, de façon particulièrement préférée d'environ 44,1 kHz.

25. Procédé selon l'une quelconque des revendications précédentes 1 à 24, au moins l'une des étapes étant réalisée de façon multiple pour augmenter la précision de l'étape, jusqu'à ce qu'un critère d'interruption soit rempli.

26. Procédé selon l'une quelconque des revendications précédentes 1 à 25, les étapes d'orientation automatique et de réalisation reproductible d'un contrôle individuel étant réalisées avec un taux de cycle de l'ordre compris entre supérieur ou égal à 0 secondes et inférieur ou égal à 3600 secondes, de préférence de l'ordre compris entre supérieur ou égal à 0 secondes et inférieur ou égal à 1800 secondes et de façon la plus préférée, dans un ordre compris entre supérieur ou égal à 0 secondes et inférieur ou égal à 900 secondes.

27. Procédé selon l'une quelconque des revendications précédentes 1 à 26, au moins l'une des étapes étant pilotée par voie acoustique, par l'intermédiaire d'un système de reconnaissance vocale et/ou d'entrée vocale.

28. Procédé selon l'une quelconque des revendications précédentes 1 à 27, au moins dans une étape, les informations s'effectuant sans fil, avec un procédé sans fil choisi dans le groupe comprenant le WLAN, le Bluetooth ou similaires.

29. Programme informatique avec des moyens de codes programmes, pour réaliser toutes les étapes de chacune quelconque des revendications 1 à 28, lorsque le programme s'exécute sur un ordinateur.

30. Produit de programme informatique avec des moyens de codes programmes, qui sont mis en mémoire sur un support de données lisible par ordinateur, pour réaliser le procédé selon chacune quelconque des revendications 1 à 28, lorsque le produit de programme s'exécute sur un ordinateur.

31. Système (1) avec des moyens adaptés pour la réalisation du procédé selon l'une quelconque des revendications 1 à 28.

32. Système (1) selon la revendication 31, le système (1) comprenant un robot (3) avec au moins un capteur de position et au moins un dispositif d'essai (8).

33. Système (1) selon la revendication 31 ou 32, le dispositif d'essai (8) comprenant au moins un unité de test fonctionnel et au moins un capteur pour détecter la rétroaction de l'unité de test fonctionnel.

34. Système selon l'une quelconque des revendications précédentes 31 à 33, **caractérisé en ce qu'**au moins un capteur est conçu sous la forme d'un capteur force/couple multi-axes pour la détection de forces et de trois couples dans trois différentes directions, pour la détection de données d'orientation.
